# EUROPÄISCHE PATENTANMELDUNG

(11) **EP 4 473 840 A1**
(43) Veröffentlichungstag der Anmeldung: **11.12.2024**
(21) Anmeldenummer: 24178883.5
(22) Anmeldetag: 29.05.2024
(51) Int. Cl.: A23C 11/10, A23L 7/104, A23L 7/10, A23L 7/20, A23L 7/25

(54) **VERFAHREN ZUR HERSTELLUNG EINES GETREIDEGETRÄNKS**

(30) Priorität: 06.06.2023 DE 102023114898
(71) Anmelder: GEA Westfalia Separator Group GmbH, 59302 Oelde (DE)
(72) Erfinder: RUBIO DOMENECH, Ángel, 48268 Greven (DE); HERBERG, Wolf-Dietrich, 58456 Witten (DE)
(74) Vertreter: Specht, Peter

(57) **Zusammenfassung**

Ein Verfahren zur Erzeugung eines Getreidegetränks, gekennzeichnet durch die folgenden Schritte:
A Bereitstellen (101) eines Getreide- und/oder Malz-Ausgangsproduktes (1), wobei das Ausgangsprodukt (1) zumindest 5 Gew.% an Malz aufweist,
B mechanisches Zerkleinern (102) des Ausgangsproduktes (1) und Zuführen von Wasser unter Ausbildung einer wässrigen Suspension (2);
C Einstellung der Temperatur auf mehr als 35°C zur Initiierung und/oder Beschleunigung einer enzymatischen Umwandlung (103) von im Ausgangsprodukt enthaltenen Stoffe in Substanzen mit höherer Wasserlöslichkeit;
D Fest-Flüssig-Trennung (104) der Suspension in zumindest eine Feststoffphase (3) und eine Flüssigphase (4),
wobei die Flüssigphase (4) als Getreidegetränk für die menschliche und tierische Ernährung ausgebildet ist.

## Beschreibung

Die vorliegende Erfindung betrifft ein Verfahren zur Herstellung eines Getreidegetränks.

Aus dem Stand der Technik ist aus der AU 2006 328 704 B2 ein Verfahren zur Verringerung der enzymatischen Aktivität in geschrotetem Getreide bekannt, welches mit überhitztem Wasserdampf und Unterdruck arbeitet.

Weiter offenbart die EP 4 062 767 A1 ein Verfahren zur Herstellung einer Pflanzenmilch unter Zusatz eines Gemüseöls.

Die RU 2 185 069 C2 offenbart ein Verfahren in welchem ein vorgekeimtes Hanf-Material fermentiert wird. Die Art der Fermentation, sei es eine mikrobielle oder enzymatische Variante, wird nicht näher erläutert. In diesem Dokument erfolgt die Fermentation über mehrfache Zeitintervalle von 12h, was eine großindustrielle Verarbeitung erschwert. Die Gefahr organischer Nebenprodukte z.B. durch oxidative Einwirkungen steigt über einen solchen stark an. Zur Beendigung der enzymatischen Tätigkeit wird heißes Wasser zugegeben, da ein Großteil von Enzymen bei höheren Temperaturen, z.B. 80°C, abgetötet werden. Eine Temperaturerhöhung bringt in diesem Fall die enzymatische Umsetzung zum Erliegen.

Getreidegetränke, umgangssprachlich auch Getreidemilch genannt, werden aus zerkleinertem Getreide hergestellt, welches in Wasser gelöst und dann mit zugesetzten Enzymen verändert wird. Diese setzen Stärke in Zucker oder Oligosaccharide um, die wiederum wasserlöslich sind. Die zugesetzten Enzyme sind synthetischer Natur und werden z.B. aus Schimmelpilzen oder anderen teilweise genmanipulierten Mikroorganismen hergestellt. Nachteilig daran ist die schlechte Okobilanz.

Es ist daher die Aufgabe der vorliegenden Erfindung, ein ökologisch deutlich verbessertes Verfahren zur Herstellung eines Getreidegetränks bereitzustellen.

Die Erfindung löst diese Aufgabe durch das Verfahren mit den Merkmalen des Anspruchs 1.

Ein erfindungsgemäßes Verfahren dient zur Erzeugung bzw. Bereitstellung eines Getreidegetränks für den menschlichen und/oder tierischen Verzehr.

Das erfindungsgemäße Verfahren, umfasst die folgenden Schritte:
A Bereitstellen eines Getreide- und/oder Malz-Ausgangsproduktes, wobei das Ausgangsprodukt; insbesondere im Fall eines Malz-Ausgangsproduktes, zumindest 5 Gew.% an Malz aufweist,

Bereits Schritt A weist einen wesentlichen Unterschied zur bisherigen Herstellungsweise von Getränken, wie z.B. Hafermilch, auf. Statt der Nutzung von synthetischen Enzymen wird hier Malz als natürlicher Enzymträger eingesetzt, so dass das Endprodukt nicht nur hinsichtlich der Hauptkomponenten des Ausgangsproduktes die Bezeichnung "Bio" trägt, sondern dass dies auch für die Enzyme zur Umwandlung des Ausgangsstoffes gilt. Es kann sich somit um ein Getreide-Ausgangsprodukt handelt. Alternativ kann es sich um ein Malz-Ausgangsprodukt mit zumindest 5 Gew.% an Malz handeln. Es kann sich auch um ein Getreide-Ausgangsprodukt mit 5 Gew.% an Malz, z.B. bei unvollständiger Vermälzung, handeln.
B mechanisches Zerkleinern des Ausgangsproduktes und Zuführen von Wasser unter Ausbildung einer wässrigen Suspension;

Das mechanische Zerkleinern ermöglicht ein besseres In-Kontakt-Bringen der einzelnen Komponenten, also z.B. des Getreides und des Malzes im Ausgangsprodukt.
C Einstellung der Temperatur auf mehr als 35°C zur Initiierung einer enzymatischen Umwandlung von im Ausgangsprodukt enthaltenen Stoffe in Substanzen mit höherer Wasserlöslichkeit;

Durch Einstellen der Temperatur, z.B. auf verschiedene Temperaturniveaus, wird der enzymatische Abbau einzelner Substanzen des Ausgangsproduktes initiiert oder zumindest beschleunigt.
D Fest-Flüssig-Trennung (103) der Suspension in zumindest eine Feststoffphase und eine Flüssigphase,

Schließlich erfolgt die Fest-Flüssig-Trennung der Suspension in eine Festphase und eine Flüssigphase. Aufgrund der feinen Verteilung der Inhaltsstoffe in der Flüssigkeit, der geringen Korngröße, aber auch des hohen Produktionsvolumens bei der Herstellung eines Nahrungsmittels, bietet sich besonders eine Dekantierzentrifuge oder ein Düsenseparator für diese Aufgabe an.

Die gewonnene Flüssigphase kann als Getreidegetränk für die menschliche und tierische Ernährung ausgebildet sein. So kann die Flüssigphase im weiteren Verlauf des Verfahrens in Getränkebehälter wie z.B. Flaschen oder Papp-Kunststoff-Container gefüllt werden.

Das erhaltene Getränk ist schließlich für die menschliche und tierische Ernährung ausgebildet. Dabei kann es geschmacklich aufgrund des zugesetzten Malzes und auch aufgrund des vernachlässigbar geringen Beitrags zur Süße des GetreideGetränks gegenüber herkömmlicher Hafermilch variieren und einen noch angenehmeren Geschmack aufweisen.

Alternativ kann die Flüssigkeitsphase auch zu einem Nahrungsmittelzusatz z.B. zur Ballaststoffanreicherung in Nahrungsmitteln und insbesondere in Futtermitteln weiterverarbeitet werden

Vorteilhafte Ausgestaltungen des Verfahrens sind Gegenstand der Unteransprüche.

Es ist von Vorteil, wenn das Ausgangsprodukt zumindest 15 Gew.% an Malz aufweist. Dadurch wird die enzymatische Umwandlung verkürzt und erfolgt umfassender.

Einen besonders guten Geschmack weist das finale Produkt auf, wenn als Malz Hafer- oder Gerstenmalz genutzt wird.

Die Hauptkomponente des Getreidegetränks ist allerdings vorzugsweise kein Malz, sondern Getreide. Dies ist nicht nur kostengünstig, sondern der finale Geschmack orientiert sich mehr nach dem Getreide als nach dem Malz. Daher ist es von Vorteil, wenn das Ausgangsprodukt zumindest 40 Gew.%, vorzugsweise zumindest 50 Gew.%, an Getreide, insbesondere an Hafer oder Gerste, aufweist.

Das verwendete Getreide und das verwendete Malz sollten vorteilhaft zueinander sortenrein sein. Das heißt im Fall von Hafermilch bzw. Hafergetränk wird als Getreide Hafer und als Malz Hafermalz eingesetzt. Durch die sortenreine Verwendung wird ein unverfälschter Genuss des jeweiligen Inhaltsstoffes im Getränk widergespiegelt. Personen mit Intoleranzen gegen Gluten, kann dadurch eine schmackhafte Alternative ohne herstellungsbedingte Kontamination durch diesen Inhaltsstoff von anderen Getreidesorten geliefert werden. Überdies weist Hafer eine besonders hohe Konzentration an β-Glucan auf, was besonders vorteilhaft ist z.B. als cholesterinsenkender Inhaltsstoff

Es ist von Vorteil, wenn im Verfahren keine zusätzliche Zugabe von Enzymen zu dem Getreide- und/oder Malz-Ausgangsprodukt oder den Zwischenprodukten, wie z.B. der daraus gebildeten Suspension oder dem enzymatisch-behandelten Feststoff-Flüssig-Gemisch erfolgt. Dies bedeutet, dass außer dem Getreide- und/oder Malz-Ausgangsprodukt und den insbesondere im Malz enthaltenen Enzymen kein zusätzliches Enzym zusätzlich zudosiert wird.

Das mechanische Zerkleinern in Schritt B kann vorteilhaft durch eine Nassvermahlung unter Zugabe von Wasser in einem Gewichtsverhältnis Getreide: Wasser von zumindest 1:1,8, vorzugszugsweise 1:2 bis 1:10, erfolgen. Diese Suspension kann bereits in den Folgeschritten ohne weitere Adaptierung weiterverarbeitet werden.

Das mechanische Zerkleinern in Schritt B kann vorteilhaft zweistufig erfolgen, wobei in einem ersten Schritt eine Grobzerkleinerung erfolgt und im zweiten Schritt eine Feinzerkleinerung durch Scherung und/oder Kavitation erfolgt. Dadurch wird eine besonders innige Verteilung bzw. ein Übergang der Inhaltsstoffe in die flüssige Phase erreicht. Überdies können die Enzyme auf einer vergleichbar großen Oberfläche angreifen.

Die Fest-Flüssig-Trennung in Schritt D kann unter Einsatz einer Dekantierzentrifuge bei Drehzahlen von zumindest 1500 U/min, vorzugsweise 3000-9000 U/min, zur massenproduktionstauglichen und effizienten Klärung erfolgen.

In diesem Zusammenhang ist es zusätzlich von Vorteil, wenn die Dekantierzentrifuge innerhalb der Dekantiertrommel zusätzliche Mittel zur Klärung aufweist, wobei die Mittel der Klärung und das Trommelvolumen derart ausgebildet sind, dass die Klärfläche der Dekantierzentrifuge zumindest 800 m², vorzugsweise 1000-25000 m², beträgt. Dadurch gelingt das Abscheiden dieser z.T. sehr fein verteilten Feststoffe in vergleichsweise hoher Quantität.

Das G-Volumen der Dekantierzentrifuge kann für eine massenproduktionsoptimierte Verarbeitung mehr als 95 m³, vorzugsweise zwischen 100-2000 m³, betragen.

Um Rezirkulationsvermischungen innerhalb der Trommel der Dekantierzentrifuge zu vermeiden, ist es von Vorteil, wenn die Umfangsgeschwindigkeit der in Schritt D eingesetzten Dekantierzentrifuge zumindest 60 m/s, vorzugsweise 60-106 m/s, beträgt.

Nachfolgend wird das erfindungsgemäße Verfahren anhand eines konkreten Ausführungsbeispiels und unter Zuhilfenahme der beiliegenden Figuren näher erläutert. Es zeigen:

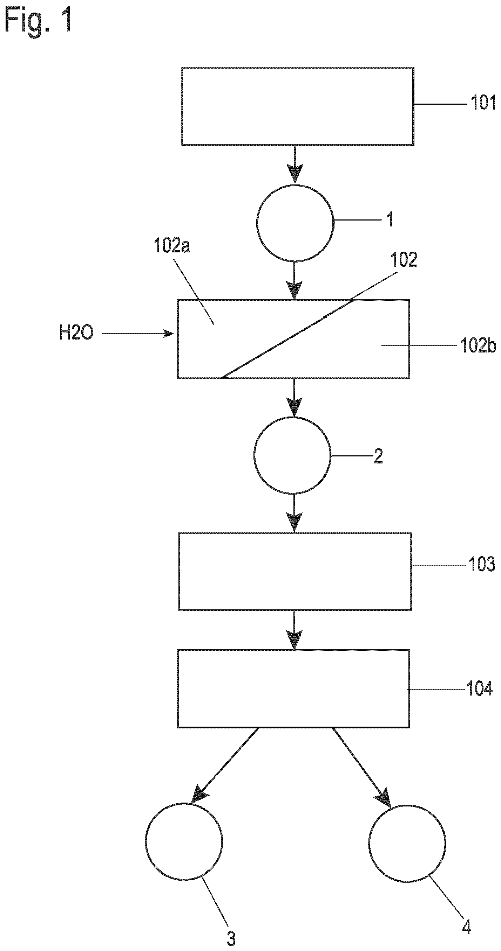

- Fig. 1: ein Fließdiagramm eines Prozessschemas als Ausführungsvariante eines erfindungsgemäßen Verfahrens.

Fig. 1 zeigt den Prozessablauf eines Ausführungsbeispiels eines erfindungsgemäßen Verfahrens. Ausgangsprodukt in diesem Verfahren ist Getreide mit einem Malzanteil von zumindest 5 Gew.%, vorzugsweise zumindest 15 Gew.%. Der Malzanteil kann bis zu 100% betragen. Es kann somit auch reines Malz eingesetzt werden. Allerdings ist der Geschmack bei einem Getreide-Malz-Gemisch mit hohem Getreideanteil von vielen Nutzern deutlich bevorzugt. Somit betrifft der erste Schritt des Verfahrens das Bereitstellen des Ausgangsproduktes 101.

Als Malz wird üblicherweise kurz gekeimtes und ggf. wieder getrocknetes Getreide oder sogenanntes Pseudogetreide bezeichnet. Die Trocknung kann mehrere Tage andauern. Dies umfasst übliche Getreidesorten wie Hafer, Gerste, Roggen, Weizen, Dinkel, Mais und/oder auch Reis, sowie Pseudogetreidesorten wie Quinoa, Buchweizen und/oder Amarant.

Malz enthält im Endosperm einen erhöhten Anteil an Enzyme. Bei den Enzymen handelt es sich vorzugsweise um Amylasen, Proteinasen und Pentosanen. Die Enzyme dienen grundsätzlich zur Überführung von Feststoffe im Endosperm in wasserlösliche wachstumsunterstützende Verbindungen. Diese malzeigenen Enzyme ersetzen im Rahmen des vorliegenden Verfahrens die typischerweise eingesetzten synthetischen Enzyme.

Verwendet man somit Malz, findet durch die malzeigenen Proteasen auch ein Proteinabbau/eine Lösung des Proteins in der wäßrigen Phase statt, welche die Ausbeute an wertvollem Protein erhöht. Das gleiche gilt für Hüllsubstanzen wie Pentosane und beta-Glucan.

Besonders bevorzugt für den Einsatz ist die Verwendung von glutenfreiem Hafermalz. Das Ausgangsprodukt kann besonders bevorzugt ausschließlich oder zumindest zu mehr als 90 Gew.% auf haferbasiertem Getreide beruhen. Dies hat den Vorteil eines stark glutenreduzierten Getränks, welches auch von glutenintoleranten Personen eingenommen werden kann.

Auch Weizen, Roggen oder besonders bevorzugt Diastasemalz können genutzt werden.

In einem zweiten Schritt 102 erfolgt das mechanische Zerkleinern des malzhaltigen Getreides. Hier kann bevorzugt eine Vermahlung genutzt werden. Vor dem Vermahlen kann optional oder alternativ ein Schroten erfolgen.

Das Vermahlen kann sodann als Trockenzerkleinerung vorzugsweise mit einer Walzen- und/oder Hammermühle, insbesondere einer Nasswalzenmühle, erfolgen.

Alternativ oder zusätzlich kann das Vermahlen des Getreides durch Nassvermahlung vorzugsweise mit einer Walzen-, Lochscheiben- und/oder Kolloidmühle erfolgen. Bei der Nassvermahlung wird zusätzlich ein Speiseöl und/oder besonders bevorzugt Wasser zugegeben um die wahlweise unpolaren oder polaren Bestandteile im zerkleinerten Getreide in Lösung zu bringen.

Beim Schritt der mechanischen Zerkleinerung 101 kann ein Mischen z.B. im Rahmen einer Nassvermahlung erfolgen. Hier wird ein polares lebensmittelverträgliches Lösungsmittel, vorzugsweise Wasser, zu dem Getreide zugegeben.

Dies erfolgt in einem Reaktor mit Rührwerk, wobei der Eintrag an Ausgangsprodukten vorzugsweise kontinuierlich erfolgt. In dem Reaktor kann eine zusätzliche Zerkleinerungsvorrichtung, z.B. eine Walze angeordnet sein. Während des Mischens 102a erfolgt somit eine Grobzerkleinerung.

Sodann wird das grobzerkleinerte Getreide/Malzgemisch in einen Intensivmischer zur Feinzerkleinerung 102b überführt. Hier erfolgt eine weitere Feinverteilung unter Ausbildung einer Suspension 2. Die Zerkleinerung kann dabei vorteilhaft durch den Einsatz einer Scherpumpe unterstützt werden.

Insgesamt können - anders als beim herkömmlichen Mehlmahlen - auch die Schalenanteile des Getreides mit zerkleinert werden.

Der bevorzugte Mahlgrad für das Verfahren insbesondere in Schritt 102a oder 102b beträgt zwischen 0,1 mm - 1 mm. Der Mahlgrad wird analog zu Kaffee gemäß der DIN 10765 ermittelt.

In einem dritten Schritt erfolgt die enzymatische Umwandlung der Inhaltsstoffe 103. Hierfür wird die Suspension 2 in einen weiteren Reaktionstank geleitet und auf eine Temperatur von mehr als 35°C erwärmt. Vorzugsweise kann der Mittelwert der Temperatur während der Umwandlung zwischen 40-100°C während des gesamten Prozessschrittes betragen.

Der Vorgang dieser enzymatischen Umwandlung 103 wird oft auch als Maischen bezeichnet. Dabei kann die Zieltemperatur auch mehr als 90°C betragen wobei das Erwärmen auf diese besagte Zieltemperatur zwischen 30-240 Minuten betragen kann.

Aufgrund der wesentlich schnelleren enzymatischen Umwandlung insbesondere auch bei optimalen Temperaturbereichen kann die enzymatische Fermentation bereits nach zumindest 6 Stunden, vorzugsweise 4 Stunden, beendet werden, z.B. durch Erhitzen, und/oder die weitere Verarbeitung im Prozess gemäß Schritt D kann nach zumindest 6 Stunden, vorzugsweise 4 Stunden, initiiert werden.

Beim Maischen werden die Inhaltsstoffe des Getreides und/oder Malzes teilweise enzymatisch in zumeist wasserlösliche Bestandteile abgebaut. Dies umfasst den Abbau von unlöslichem Eiweiß in lösliches Eiweiß und Aminosäure, den Abbau von Stärke in einen oder mehrere Zucker und/oder Dextrine und Abbau und/oder die Lösung von Gerüst- und Hüllsubstanzen des Korns wie Pentosan, beta-Glukan und ggf. Gummiverbindungen.

Bemerkenswert dabei ist, dass im Zuge des enzymatischen Abbaus keine weiteren Enzyme zusätzlich zu den im Malz enthaltenen Enzymen zudosiert werden.

Derartige nicht-verwendete Enzyme werden z.B. durch Genmanipulation und/oder aus Schimmelpilzen gewonnen.

Mittels einer Variation und Dauer der Prozesstemperatur kann in diesem Schritt die Zusammensetzung des Produktes gesteuert werden.

Beispielsweise begünstigt eine Erwärmung auf eine Temperatur zwischen 90-100°C und/oder ein Kochen im Anschluss an die enzymatische Umwandlung eine Ausfällung von unlöslichem Eiweiß.

In einem vierten Schritt erfolgt die Fest-Flüssig-Trennung 104 der unlöslichen Bestandteile als Feststoffphase 3 und der Flüssigkeit als Flüssigphase 4. Dies kann in einem Dekantierschritt vorzugsweise in einem Dekanter bzw. einer Dekantierzentrifuge erfolgen. Dies wird angesichts der geringen Dichteunterschiede der Feststoffe in der Flüssigkeit durch besondere Verfahrensparameter besonders begünstigt

Die bevorzugte Trommeldrehzahl der Dekantierzentrifuge kann in dieser Anwendung für eine möglichst umfassende Trennung der sehr fein verteilten Feststoffe mehr als 1500 U/min, vorzugsweise zwischen 3000-9000 U/min, betragen.

Die Klärfläche der in Schritt eingesetzten Dekantierzentrifuge kann mehr als 800 m², vorzugsweise zwischen 1000 - 25000 m², betragen.

Das G-Volumen der in Schritt eingesetzten Dekantierzentrifuge kann mehr als 95 m³, vorzugsweise zwischen 100 - 2000 m³, betragen.

Die Umfangsgeschwindigkeit der in Schritt eingesetzten Dekantierzentrifuge kann mehr als 59 m/s, vorzugsweise zwischen 60 - 106 m/s, betragen. Diese Drehzahlen und Klärflächen sind, anders als bei Laborversuchen, auf eine effiziente massenproduktionstaugliche Herstellung abgestimmt.

Die Nutzung von Malz anstelle von zudosierten künstlichen Enzymen ermöglicht überdies auch den Abbau von längerkettigen Proteinen.

Dadurch werden nicht nur natürliche Ausgangsprodukte zur Herstellung des Getreidegetränks genutzt, sondern auch die Enzyme sind natürliche Ausgangsprodukte.

Besonders bevorzugt wird sowohl das Getreide als auch das eingesetzte Malz aus Hafer. Somit ist ein 100%iger sortenreiner Einsatz möglich. Ebenfalls bevorzugt anstelle von Hafer ist Gerste.

Dies verhindert einen erhöhten Gehalt an Gluten. Überdies kann ein erhöhter Wert an β-Glucan (beta-Glucan) erreicht werden.

Beispielsweise kann der Anteil an Hafermalz oder Gerstenmalz 20 Gew.% betragen. Das bedeutet 80 Gew.% des Getreides müssen nicht vorher vermalzt werden

Durch den Abbau der schwer-löslichen langkettigen Proteinen in kleinere lösliche Proteineinheiten kann überdies die Protein-Ausbeute erhöht werden, da Malz auch Eiweiß-abbauende Enzyme enthält. Dies war bei bisherigem Einsatz der künstlichen Enzyme eher unüblich.

Überdies weist das Produkt durch Zusatz von Malz einen volleren Geschmack auf. Dies kann u.a. auch auf die Bestandteile des Malzes z.B. Mineralstoffe oder Maltose zurückgeführt werden.

Trotz Maltose als Inhaltsstoff hat Malz keinen Einfluss auf den Süßegrad des Getränkes, welcher im Wesentlichen durch andere Zucker, z.B. Saccharose oder dergl., bestimmt wird.

Das nach der Fest-Flüssigtrennung erhaltene Getreide-Getränk ist insbesondere auch vegan.

Das Getreidegetränk kann durch etwaige Behandlungsverfahren zur längeren Haltbarmachung, wie z.B. kurzzeitige Erhitzung, oder unmittelbar in entsprechende Getränkebehälter abgefüllt werden.

### Bezugszeichenliste

- 1: Ausgangsprodukt
- 2: Suspension
- 3: Feststoffphase
- 4: Flüssigphase / Getreidegetränk

- 101: Bereitstellen eines Getreide- und/oder Malz-Ausgangsproduktes
- 102: mechanisches Zerkleinern
- 102a: Grobzerkleinerung
- 102b: Feinzerkleinerung
- 103: enzymatische Umwandlung
- 104: Fest-Flüssig-Trennung

## Patentansprüche

1. Verfahren zur Erzeugung eines Getreidegetränks oder Nahrungsmittelzusatzes, **gekennzeichnet durch** die folgenden Schritte:
A Bereitstellen (101) eines Getreide- und/oder Malz-Ausgangsproduktes (1), wobei das Ausgangsprodukt (1) zumindest 5 Gew.% an Malz aufweist,
B mechanisches Zerkleinern (102) des Ausgangsproduktes (1) und Zuführen von Wasser unter Ausbildung einer wässrigen Suspension (2);
C Einstellung der Temperatur auf mehr als 35°C zur Initiierung und/oder Beschleunigung einer enzymatischen Umwandlung (103) von im Ausgangsprodukt enthaltenen Stoffe in Substanzen mit höherer Wasserlöslichkeit;
D Fest-Flüssig-Trennung (104) der Suspension in zumindest eine Feststoffphase (3) und eine Flüssigphase (4),
wobei die Flüssigphase (4) als Getreidegetränk für die menschliche und tierische Ernährung ausgebildet ist oder zu einem Nahrungsmittelzusatz weiterverarbeitet wird.

2. Verfahren nach Anspruch 1, **dadurch gekennzeichnet, dass** das Ausgangsprodukt (1) zumindest 15 Gew.% an Malz aufweist.

3. Verfahren nach Anspruch 1 oder 2, **dadurch gekennzeichnet, dass** das Malz als Hafer-, Weizen-, Roggen-, Diastase- oder Gerstenmalz ausgebildet ist.

4. Verfahren nach einem der vorhergehenden Ansprüche, **dadurch gekennzeichnet, dass** das Getreide-Ausgangsprodukt (1) zumindest 40 Gew.%, vorzugsweise zumindest 50 Gew.%, an Getreide, insbesondere an Hafer oder Gerste, aufweist.

5. Verfahren nach einem der vorhergehenden Ansprüche, **dadurch gekennzeichnet, dass** das im Ausgangsprodukt (1) verwendete Getreide und das verwendete Malz zueinander sortenrein sind.

6. Verfahren nach einem der vorhergehenden Ansprüche, **dadurch gekennzeichnet, dass** der Mahlgrad zwischen 0,1 mm und 1,0 mm beträgt.

7. Verfahren nach einem der vorhergehenden Ansprüche, **dadurch gekennzeichnet, dass** im Verfahren keine zusätzliche Zugabe von Enzymen zu dem Getreide- und/oder Malz-Ausgangsprodukt (1) oder den daraus gewonnenen Zwischenprodukten erfolgt.

8. Verfahren nach einem der vorhergehenden Ansprüche, **dadurch gekennzeichnet, dass** das mechanische Zerkleinern in Schritt B durch eine Nassvermahlung unter Zugabe von Wasser in einem Gewichtsverhältnis Getreide: Wasser von zumindest 1:1,8, vorzugszugsweise 1:2 bis 1:10, erfolgt.

9. Verfahren nach einem der vorhergehenden Ansprüche, **dadurch gekennzeichnet, dass** Schritt C, also das enzymatische Umwandeln (103) durch Temperaturerhöhung, über zumindest 30 min, vorzugsweise 35-240 min, erfolgt.

10. Verfahren nach einem der vorhergehenden Ansprüche, **dadurch gekennzeichnet, dass** die enzymatische Umwandlung nach zumindest 6 Stunden, vorzugsweise 4 Stunden, beendet wird und/oder dass Schritt D nach zumindest 6 Stunden, vorzugsweise 4 Stunden, beginnt.

11. Verfahren nach einem der vorhergehenden Ansprüche, **dadurch gekennzeichnet, dass** das mechanische Zerkleinern (102) in Schritt B zweistufig erfolgt, wobei in einem ersten Schritt eine Grobzerkleinerung (102a) erfolgt und im zweiten Schritt eine Feinzerkleinerung (102b) durch Scherung und/oder Kavitation erfolgt.

12. Verfahren nach einem der vorhergehenden Ansprüche, **dadurch gekennzeichnet, dass** Fest-Flüssig-Trennung (104) in Schritt D unter Einsatz einer Dekantierzentrifuge oder Düsenseparatoren bei Drehzahlen von zumindest 1500 U/min, vorzugsweise 3000-9000 U/min, erfolgt.

13. Verfahren nach einem der vorhergehenden Ansprüche, **dadurch gekennzeichnet, dass** die Dekantierzentrifuge innerhalb der Dekantiertrommel zusätzliche Mittel zur Klärung aufweist, wobei die Mittel der Klärung und das Trommelvolumen derart ausgebildet sind, dass die Klärfläche der Dekantierzentrifuge zumindest 800 m², vorzugsweise 1000-25000 m², beträgt.

14. Verfahren nach einem der vorhergehenden Ansprüche, **dadurch gekennzeichnet, dass** das G-Volumen der Dekantierzentrifuge mehr als 95 m³, vorzugsweise zwischen 100-2000 m³, beträgt.

15. Verfahren nach einem der vorhergehenden Ansprüche, **dadurch gekennzeichnet, dass** die Umfangsgeschwindigkeit der in Schritt D eingesetzten Dekantierzentrifuge zumindest 60 m/s, vorzugsweise 60-106 m/s, beträgt.

16. Verfahren nach einem der vorhergehenden Ansprüche, **dadurch gekennzeichnet, dass** die in Schritt D gewonnene Flüssigphase (4) unmittelbar oder nach weiteren Behandlungsschritten, insbesondere zur längeren Haltbarmachung, in einen Getränkebehälter abgefüllt werden.
